# EUROPEAN PATENT SPECIFICATION

(11) **EP 1 819 900 B1**
(45) Date of publication and mention of the grant of the patent: **21.01.2009**
(21) Application number: 05814861.0
(22) Date of filing: 28.11.2005
(51) Int. Cl.: E21B 47/01, G01V 11/00

(54) **SONDE ATTACHMENT MEANS**
BEFESTIGUNGSMITTEL FÜR BOHRLOCHMESSGERÄT
MOYENS DE FIXATION DE SONDE

(30) Priority: 30.11.2004 GB 0426183
(43) Date of publication of application: 22.08.2007
(73) Proprietor: SCHLUMBERGER HOLDINGS LIMITED, Road Town, None Tortola (VG); Services Pétroliers Schlumberger, 75007 Paris (FR); Schlumberger Technology B.V., 2514 JG The Hague (NL)
(72) Inventor: JAQUES, Paul Steven, Cornwall TR26 2DP (GB); JONES, Robert Hughes, Cambridgeshire CB24 5SW (GB)
(74) Representative: Mirza, Akram Karim
(86) International application number: PCT/IB2005/003560
(87) International publication number: WO 2006/059197

(56) References cited:
- EP-A- 0 943 782
- US-A- 2 786 987
- US-A- 5 255 245
- US-A- 5 509 474
- US-A1- 2004 194 956

## Description

This invention relates to a sonde for installation in a well, a well assembly comprising such a sonde, and methods for installing acoustic sensing equipment in a well and sensing acoustic vibration in a well.

### BACKGROUND

Microseismic analysis of the geological strata around the bore of fluid injection and production wells is typically effected by the use of seismic sensor assemblies (sondes), mounted downhole in the area of the fluid flow. Usually a number of sondes are mounted in the well at different levels in the bore. Deployment techniques have been developed to allow the sensors to become almost completely mechanically decoupled from the flow induced noise from the tubing.

Systems for permanently installing a sonde against an inner wall of a pipe, such as the casing of a fluid extraction well, are known. Such systems are described in, for example, U.S. Patents Nos. 5,092,423, 5,181,565. 5,200,581, 5,111,903, 6,289,985, 6,173,804 and 5,318,129. Other systems for applying sensors against the wall of a borehole are shown in U.S. Patent No 5,509,474, which discloses lagging apparatus for measuring fluid flow outside the casing of a well from within the well, and comprising bow shaped springs for urging temperature sensors against the inside of the casing, in U.S Patent No. 5,255,245, which discloses a probe for imaging the inside of an uncased borehole, the probe comprising imaging sensors disposed on a moulded elastomer casing which is unfolded at the desired imaging position to apply the sensors against the borehole wall, and U.S. Patent Application No. 2004/194506, which discloses a sonde comprising a resilient C-shaped member which is used to urge at least one sensor into contact with the inside of a borehole casing.

Typically, a sonde comprises a clamp which permanently or semi-permanently engages with the inner casing of a well. For example, the clamp may be lowered into the well in a retracted state and then once in position activated to engage with the well casing using a pressure actuated system, which may use external pressure sources or well pressure. Such a clamp is described in patent application no. EP-A-1370891, the contents of which are incorporated herein by reference, which describes C-shaped ring clamps. It is also possible to activate the clamp near the top of the well, and simply drag it down the well, acting against friction between the clamp and well casing, into the desired position.

A disadvantage of these systems is that because the sondes (for example with C-shaped ring clamps) are released from the tubing and clamped to the inside of the casing, any large tubing movement, i.e. typically more than 15 cm, can cause the risk of coupling the sondes back to the tubing. Such movement is invariably axial or rotational. These systems only perform at their best when the tubing movement is small. Small movements can also be accommodated by the wires from the sensors mounted on the casing and running up the tubing, whereas large movements will result in breakage of these wires.

Well completions differ significantly from well to well and temperature changes cause thermal expansion to the installed tubing. Completions have to be designed to allow for the tubing axial or rotational movement, and this can be done by the installation of a seal bore packer for example.

For well completions of this type where tubing movement occurs, it would therefore be preferable to provide a means of allowing the sondes to move along the inside of the casing when the tubing moves while maintaining good mechanical decoupling.

With such an arrangement, the sondes must be able to move along the axis of the borehole when the tubing moves, this tubing movement being possible in either direction. Therefore, the sonde must be secured to the tubing by some mechanical means which should have some or all of the following properties:
a) it is strong enough to allow the sonde to be dragged along the casing;
b) it does not change the frequency properties of the sonde by changing or adding unwanted resonance; and
c) most importantly, it does not provide a path for flow noise from tubing to sonde.

It is an object of the present invention to provide a sonde having such securement means.

### SUMMARY OF THE INVENTION

In accordance with a first aspect of the present invention, there is provided a sonde for installation in a well having a casing and an inner tubing disposed inside the casing and through which fluid flows into or out of the well, the sonde comprising a resilient clamp adapted to be compressed for insertion into the well and to engage with the inner wall of the casing, at least one acoustic sensor carried by the clamp so as to be acoustically coupled to the casing thereby, and securing means for securing the clamp to the inner tubing, characterised in that the securing means comprises attachment means for connection to the inner tubing and at least one rod connected between the clamp and the attachment means.

The securing means preferably comprises a plurality of such rods. With this arrangement, at least one such rod and attachments means may be provided on each side of the clamp along the axis of the well.

Advantageously, the attachment means includes a resiliently deformable material for coupling it to the tubing.

The attachment means may comprise electrical distribution means enabling electrical connection between the at least one acoustic sensor and wellhead components, the electrical distribution means being fixed relative to the sonde.

The clamp may be substantially C-shaped.

In accordance with a second aspect of the invention, there is provided a well assembly comprising a well, a well casing lining the wall of the well, tubing extending internally through the well and a sonde in accordance with the first aspect of the invention.

In accordance with a third aspect of the invention, there is provided a method of installing acoustic sensing equipment in a well having a casing and an inner tubing within the casing, the method comprising the steps of: providing a sonde in accordance with the first aspect of the invention; fitting the sonde to the inner tubing of the well while the clamp is in a compressed state; allowing the clamp to expand so that it contacts the inner wall of the well casing; and pushing the sonde along the well to its desired position.

In accordance with a fourth aspect of the invention, there is provided a method of installing acoustic sensing equipment in a well having a casing and an inner tubing within the casing, the method comprising the steps of: providing a sonde in accordance with the first aspect of the invention; fitting the sonde to the inner tubing of the well while the clamp is in a compressed state; lowering the sonde along the well to its desired position; and allowing the clamp to expand so that it contacts the inner wall of the well casing.

In accordance with a fifth aspect of the present invention, there is provided a method of sensing acoustic vibration around a well having a casing and an inner tubing within the casing and through which fluid flows into or out of the well, the method comprising the steps of: providing a sonde in accordance with the first aspect of the invention; and installing the sonde at a desired position in the well so that acoustic sensing equipment carried by the sonde is hold against the inner wall of the well casing.

Thus the object of the invention is achieved by connecting at least one rigid "tether rod" between the sonde and the tubing. A plurality of such rods may be fitted above and below the sonde and attach on to this tubing at soft mounted interfaces above and below the sonde.

The cross sectional area of the rods must be small in comparison to the cross sectional area of the tubing, which provides a high 'impedance' mismatch between cable and tubing. In popular science terms: compare this to a thin rope connected to a heavy rope. If you swing the thin rope, a travelling wave will propagate through the rope, when it reaches the heavy rope this wave will be largely reflected, instead of travelling along the heavy rope. This works two ways, if you swing the heavy rope the wave will also be reflected at the thin rope - instead of travelling further along the thin rope. Thus, although the sonde is mechanically coupled to the installed tubing, it is effectively isolated, acoustically, from the noise generated by the fluid flow in the tubing. The dimensions, especially the diameter, and the material of the tether rods can be calculated to provide such acoustic isolation over the band of frequencies required to be sensed by the sonde, taking into account the choice of material for the rods.

Embodiments in accordance with the invention have the following advantages over the prior art:
i) The acoustic sensors remain acoustically decoupled from the flow noise;
ii) Potential damage to the sensor electrical wiring by tubing movement is prevented;
iii) A strong connection to the tubing is provided. The rod size and number can be adjusted to suit requirements;
iv) There is no low frequency resonance added in the seismic frequency band;
v) The rods can be fitted to any shaped clamp equipment; and
vi) Deployment from the surface is enabled without any remote actuation equipment. Therefore, the tool may be dragged down from the surface during installation. No actuation mechanism, e.g. downhole pressure supply is required, and the need for a threaded section of tubing required by prior art systems, typically 1500 mm long and carrying the pre-assembled clamp system, is eliminated.

### DESCRIPTION OF DRAWINGS

The invention will now be described by way of example with reference to the accompanying drawings, in which:
Figure 1 shows a first embodiment of the sonde in position in a well, the sonde comprising a C-shaped ring clamp; and
Figure 2 shows a second embodiment in which the sonde comprises a different C-shaped clamp.

### DETAILED DESCRIPTION

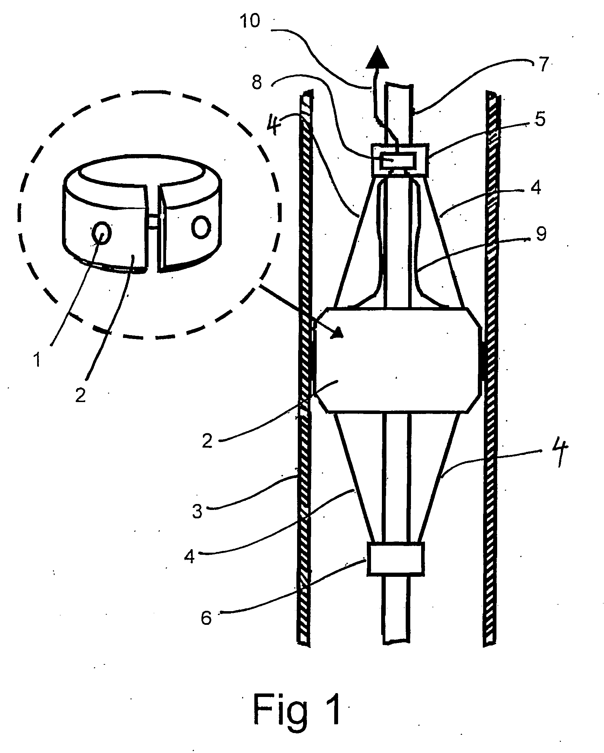

Fig 1 shows a first embodiment of the invention wherein the sonde comprises a C-shaped spring clamp design as described in the patent application no. EP-A-1370891. Typically four acoustic sensors 1 are mounted in the C-shaped clamp 2. The clamp 2 may be positioned within the well casing 3 by being fitted over production tubing 7, compressed by a mechanical assembly and released hydraulically when the assembly has been lowered down the well casing 3, to the required depth down the well. Alternatively the clamp may be compressed (e.g. manually) and fitted over tubing 7 near the top of the well and then allowed to engage the well casing and simply slide down the well in contact with the casing 3 until it is in position. As shown in this embodiment, the C-shaped sonde clamp 2 is attached to thin rigid tether rods 4, typically six rods being used, i.e. three above and three below. The other ends of the rods are connected to attachment means 5 and 6 which are in turn affixed to the tubing 7. The attachments 5 and 6 may be soft-mounted to tubing 7, e.g. using a resiliently deformable material, such as a suitable polymer, between the attachment and the tubing, which acts to dampen acoustic vibration to prevent noise transfer between the tubing and the clamp, and hence to sensors 1. The attachment 5 also supports a distribution unit 8 which provides an electrical interface between the wires 9, from each of the acoustic sensors 1, and the cable 10 to the wellhead and its acoustic signal processing system. Since the sonde is mechanically coupled to the distribution unit, i.e. the distribution unit is secured relative to the sonde, any movement of the well casing relative to the tubing does not result in damage to the electrical wiring, which is a potential risk in conventional systems.

In the second of the above positioning methods, installation of the sonde is effected by fixing the whole assembly, consisting of the sonde clamp 2 with sensors 1 coupled to the attachments 5 and 6 by the tether rods 4, pre-wired to distribution unit 8 and cable 10, to the tubing 7, prior to lowering the tubing 7 down the well. With the assembly attached to the tubing 7, the clamp 1 is compressed manually to allow it to slip into the casing, facilitated by the chamfered edges of the clamp. The tubing may then be lowered down the well with the clamp 2 sliding down the casing 3, with the force to enable it to do so transmitted from the tubing 7 via the attachments 5 and 6 and the tether rods. This does not damage either the clamp or the well casing as the clamp is typically made of a very hard material, for example Inconel (RTM), and also due to the lubricating effect of fluid in the well. Alternatively, the clamp may be retained in its compressed state until the correct position is reached down the well.

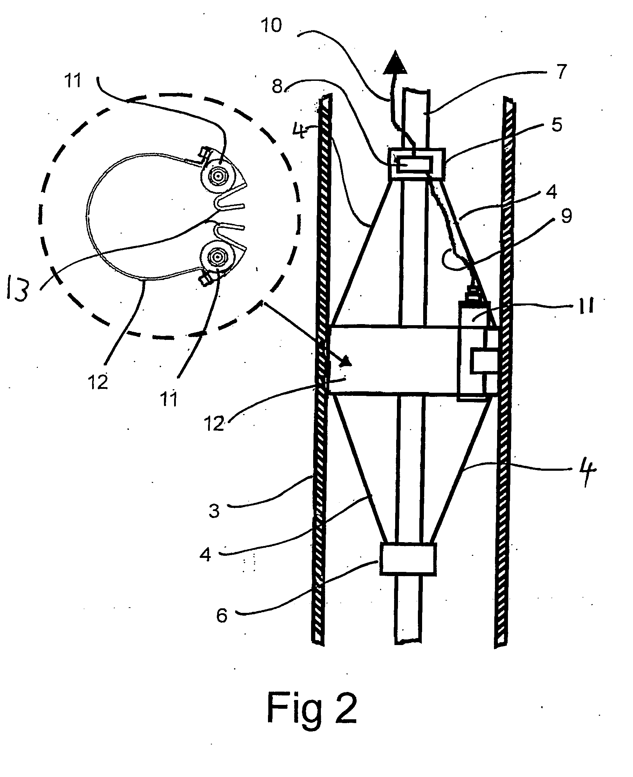

Fig 2 shows a second embodiment of the invention applied to an alternative design of sonde C-shaped clamp which is also described in EP-A-1370891. In this case, sonde packs 11 each consisting of typically four sensors arranged in a tetrahedral configuration are attached to a spring clamp 12. In the same manner as in the first embodiment, the clamp is attached to typically six thin rigid tether rods 4, i.e. three above and three below, the other ends of the rods 4 connected to attachments 5 and 6 which are also affixed to the tubing 7 as in the first embodiment. The method of installation is somewhat different to the first embodiment though. The clamp shown in Fig.2 is contracted and expanded by physical manipulation of the members 13 at the ends of the C-shape. In practice, a forked member (not shown) like in EP-A-1370891 is used to hold the members 13 together to contract the clamp until it is inserted into the well. The clamp may then either by positioned while the clamp is retracted and then expanded to hold it in position against the well casing, or expanded near the top of the well and pushed down to the desired position against the well casing. Expansion of the clamp is effected by removing the forked member from engagement with members 13, so that the clamp moves into the expanded state. Sliding the expanded clamp down the casing does not damage either the clamp or the well casing as the clamp is typically made of a very hard material, for example Inconel (RTM), and also due to the lubricating effect of fluid in the well.

It should be noted that both forms of clamp provide substantial force to press the sonde to the well casing to ensure good acoustic coupling. Experimental work with a prototype has demonstrated that the sliding friction force within the casing is sufficiently low for the tether rods to adequately overcome these forces during installation.

It should be noted that the invention is not limited to the embodiments shown, and various alternatives are possible within the scope of the claims. For example, although the invention has been described with reference to C-shaped clamps, any design of clamp may be used which can have the rods attached thereto.

## Claims

1. A sonde for installation in a well having a casing (3) and an inner tubing (7) disposed inside the casing and through which fluid flows into or out of the well, the sonde comprising a clamp (2) adapted to be compressed for insertion into the well and to engage with the inner wall of the casing, at least one acoustic sensor (1) carried by the clamp so as to be acoustically coupled to the casing thereby, and securing means (4, 5, 6) for securing the clamp to the inner tubing, **characterised in that** the securing means comprises attachment means (5,6) for connection to the inner tubing and at least one rod (4) connected between the clamp and the attachment means.

2. A sonde according to claim 1, wherein the securing means (4, 5, 6) comprises a plurality of such rods (4).

3. A sonde according to claim 1 or claim 2, wherein one such securing means (4, 5, 6) is provided on each side of the clamp along the axis of the well.

4. A sonde according to any preceding claim, wherein the attachment means (5, 6) includes a resiliently deformable material for coupling it to the tubing.

5. A sonde according to any preceding claim, wherein the attachment means (5) comprises electrical distribution means (8) enabling electrical connection between the at least one acoustic sensor (1) and wellhead components, the electrical distribution means being fixed relative to the sonde.

6. A sonde according to any preceding claim, wherein the clamp (2) carries a plurality of such acoustic sensors (1) spaced circumferentially therearound.

7. A sonde according to any preceding claim, wherein the clamp (2) is substantially C-shaped.

8. A well assembly comprising a well, a well casing (3) lining the wall of the well, tubing (7) extending internally through the well and a sonde in accordance with any preceding claim secured between the casing and the tubing.

9. A method of installing acoustic sensing equipment in a wall having a casing and an inner tubing within the casing, the method comprising the steps of:
providing a sonde in accordance with any one of claims 1 to 7;
fitting the sonde to the inner tubing of the well while the clamp is in a compressed state;
allowing the clamp to expand so that it contacts the inner wall of the well casing; and
pushing the sonde along the well to its desired position.

10. The method of claim 9, wherein the pushing is effected with the inner tubing.

11. A method of installing acoustic sensing equipment in a well having a casing and an inner tubing within the casing, the method comprising the steps of:
providing a sonde in accordance with any one of claims 1 to 7;
fitting the sonde to the inner tubing of the well while the clamp is in a compressed state;
lowering the sonde along the well to its desired position; and
allowing the clamp to expand so that it contacts the inner wall of the well casing.

12. A method of sensing acoustic vibration around a well having a casing and an inner tubing within the casing and through which fluid flows into or out of the well, the method comprising the steps of:
providing a sonde in accordance with any one of claims 1 to 7; and
installing the sonde at a desired position in the well so that acoustic sensing equipment carried by the sonde is held against the inner wall of the well casing.

## Patentansprüche

1. Sonde für die Installation in einem Bohrloch, das ein Futterrohr (3) und eine innere Verrohrung (7), die in dem Futterrohr angeordnet ist und durch die Fluid in das oder aus dem Bohrloch strömt, umfasst, wobei die Sonde eine Klemme (2), die dazu ausgelegt ist, für die Einführung in das Bohrloch komprimiert zu werden und mit der Innenwand des Futterrohrs in Eingriff zu gelangen, wenigstens einen Schallsensor (1), der von der Klemme getragen wird, damit er mit dem Futterrohr akustisch gekoppelt ist, und Befestigungsmittel (4, 5, 6), um die Klemme an der inneren Verrohrung zu befestigen, umfasst, **dadurch gekennzeichnet, dass** die Befestigungsmittel Anbringungsmittel (5, 6) für die Verbindung mit der inneren Verrohrung und wenigstens eine Stange (4), die zwischen der Klemme und den Anbringungsmitteln verbunden ist, umfassen.

2. Sonde nach Anspruch 1, wobei die Befestigungsmittel (4, 5, 6) mehrere solche Stangen (4) umfassen.

3. Sonde nach Anspruch 1 oder nach Anspruch 2, wobei auf jeder Seite der Klemme in Richtung der Achse des Bohrlochs ein solches Befestigungsmittel (4, 5, 6) vorgesehen ist.

4. Sonde nach einem vorhergehenden Anspruch, wobei die Befestigungsmittel (5, 6) ein elastisch verformbares Material aufweisen, um sie mit der Verrohrung zu koppeln.

5. Sonde nach einem vorhergehenden Anspruch, wobei die Befestigungsmittel (5) elektrische Verteilungsmittel (8) umfassen, die eine elektrische Verbindung zwischen dem wenigstens einen Schallsensor (1) und Bohrlochkopf-Komponenten ermöglichen, wobei die elektrischen Verteilungsmittel in Bezug auf die Sonde fest sind.

6. Sonde nach einem vorhergehenden Anspruch, wobei die Klemme (2) mehrere solche Schallsensoren (1) trägt, die in Umfangsrichtung beabstandet sind.

7. Sonde nach einem vorhergehenden Anspruch, wobei die Klemme (2) im Wesentlichen C-förmig ist.

8. Bohrlochanordnung, die ein Bohrloch, ein Bohrlochfutterrohr (3), mit dem die Wand des Bohrlochs verkleidet ist, eine Verrohrung (7), die sich intern durch das Bohrloch erstreckt, und eine Sonde nach einem vorhergehenden Anspruch, die zwischen dem Futterrohr und der Verrohrung befestigt ist, umfasst.

9. Verfahren zum Installieren einer Schallerfassungsanordnung in einem Bohrloch, das ein Futterrohr und eine innere Verrohrung in dem Futterrohr besitzt, wobei das Verfahren die folgenden Schritte umfasst:
Vorsehen einer Sonde nach einem der Ansprüche 1 bis 7;
Einsetzen der Sonde in die innere Verrohrung des Bohrlochs, wenn die Klemme in einem komprimierten Zustand ist;
Zulassen, dass sich die Klemme ausdehnt, so dass sie mit der Innenwand des Bohrlochfutterrohrs in Kontakt gelangt; und
Schieben der Sonde längs des Bohrlochs an ihre gewünschte Position.

10. Verfahren nach Anspruch 9, wobei das Schieben mit der inneren Verrohrung bewerkstelligt wird.

11. Verfahren zum Installieren einer Schallerfassungsanordnung in einem Bohrloch, das ein Futterrohr und eine innere Verrohrung in dem Futterrohr besitzt, wobei das Verfahren die folgenden Schritte umfasst:
Vorsehen einer Sonde nach einem der Ansprüche 1 bis 7;
Einsetzen der Sonde in das innere Futterrohr des Bohrlochs, wenn die Klemme in einem komprimierten Zustand ist;
Absenken der Sonde längs des Bohrlochs an ihre gewünschte Position; und
Zulassen, dass sich die Klemme ausdehnt, so dass sie mit der Innenwand des Bohrlochfutterrohrs in Kontakt gelangt.

12. Verfahren zum Erfassen von Schallschwingungen um ein Bohrloch, das ein Futterrohr und eine innere Verrohrung in dem Futterrohr besitzt, durch die Fluid in das oder aus dem Bohrloch strömt, wobei das Verfahren die folgenden Schritte umfasst:
Vorsehen einer Sonde nach einem der Ansprüche 1 bis 7; und
Installieren der Sonde an einer gewünschten Position im Bohrloch, so dass die Schallerfassungsanordnung die von der Sonde getragen wird, gegen die Innenwand des Bohrlochfutterrohrs gehalten wird.

## Revendications

1. Sonde pour installation dans un puits comprenant un chemisage (3) et un tubage intérieur (7), disposé à l'intérieur du chemisage et à travers lequel du fluide s'écoule, dans ou hors du puits la sonde comprenant un collier de serrage (2), adapté pour être comprimé pour insertion à l'intérieur du puits et pour venir en prise avec la paroi intérieure du chemisage au moins un capteur acoustique (1), porté par le collier de serrage, de manière à être ainsi couplé acoustiquement au chemisage, et des moyens de fixation (4, 5, 6) pour fixer le collier de serrage au tubage inférieur, **caractérisée en ce que** les moyens de fixation comprennent des moyens d'attachement (5, 6), pour connexion au tubage intérieur et au moins une tige (4), connectée entre le collier de serrage et les moyens d'attachement.

2. Sonde selon la revendication 1, dans laquelle les moyens de fixation (4, 5, 6) comprennent une pluralité de telles tiges (4).

3. Sonde selon la revendication 1 ou 2. dans laquelle un tel moyen de fixation (4, 5, 6) est prévu de chaque côté du collier de serrage, le long de l'axe du puits.

4. Sonde selon l'une quelconque des revendications précédentes, dans laquelle les moyens d'attachement (5, 6) sont composés d'un matériau déformable élastiquement pour leur couplage au tubage.

5. Sonde selon l'une quelconque des revendications précédentes, dans laquelle les moyens d'attachement (5) comprennent des moyens de distribution électrique (8), permettant une connexion électrique entre le au moins un capteur acoustique (1) et les composants de tête de puits, les moyens de distribution électrique étant fixés à la sonde.

6. Sonde selon l'une quelconque des revendications précédentes, dans laquelle le collier de serrage (2) porte une pluralité de tels capteurs acoustiques (1), espacés circonférentiellement autour de lui.

7. Sonde selon l'une quelconque des revendications précédentes, dans laquelle le collier de serrage (2) est sensiblement en forme de C.

8. Ensemble de puits comprenant un puits, un chemisage de puits (3), revêtant la paroi du puits, un tubage (7), s'étendant intérieurement à travers le puits et une sonde selon l'une quelconque des revendications précédentes, fixée entre le chemisage et le tubage.

9. Procédé l'installation d'un équipement de détection acoustique dans un puits muni d'un chemisage et d'un tubage intérieur à l'intérieur du chemisage, le procédé comprenant les étapes consistant à :
fournir un sonde selon l'une quelconque des revendications 1 à 7 ;
monter la sonde sur le tubage intérieur du puits, tandis que le collier de serrage se trouve à l'état comprimé ;
laisser la sonde se déployer, de manière qu'elle entre en contact avec la paroi intérieure du chemisage de puits : et
pousser la sonde le long du puits, à sa position souhaitée.

10. Procédé selon la revendication 9, dans lequel le poussage est effectué avec le tubage intérieur.

11. Procédé d'installation d'un équipement de détection acoustique dans un puits muni d'un chemisage et d'un tubage intérieur à l'intérieur du chemisage, le procédé comprenant les étapes consistant à :
fournir une sonde selon l'une quelconque des revendications 1 à 7 :
monter la sonde sur le tubage intérieur du puits tandis que le collier de serrage se trouve à l'état comprimé :
abaisser la sonde le long du puits, jusqu'à sa position souhaitée.
laisser la sonde se déployer, de manière qu'elle entre en contact avec la paroi intérieure du chemisage de puits.

12. Procédé de détection de vibrations acoustiques autour d'un puits muni d'un chemisage et d'un tubage intérieur, placé à l'intérieur du chemisage, et à travers lequel du fluide s'écoule, dans ou hors du puits, le procédé comprenant les étapes consistant à :
fournir une sonde selon l'une quelconque des revendications 1 à 7 ; et
installer la sonde à une position souhaitée dans le puits, de manière que l'équipement de détection acoustique porté par la sonde soit maintenu contre la paroi intérieure du chemisage de puits.
